# EUROPÄISCHE PATENTANMELDUNG

(11) **EP 4 411 849 A2**
(43) Veröffentlichungstag der Anmeldung: **07.08.2024**
(21) Anmeldenummer: 23218594.2
(22) Anmeldetag: 20.12.2023
(51) Int. Cl.: H01M 4/04, H01M 10/0525, H01M 10/058, H01M 10/44, H01M 10/46, H01M 50/105

(54) **VERFAHREN ZUR FERTIGUNG EINER LITHIUM-IONEN-BATTERIEZELLE**

(30) Priorität: 11.01.2023 DE 102023200192
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betrifft ein Verfahren zur Fertigung einer Lithiumionen-Batteriezelle, insbesondere Batteriepouchzelle, mit einem Formationsprozess, in dem die Batteriezelle einem Erstladevorgang unterworfen wird, in dem sich Lithiumionen in Aktivmaterial (3, 5) der zumindest einen Anode (A) der Batteriezelle einlagern, und zwar unter Bildung einer SEI-Grenzschicht (9) an der Grenzfläche zum Elektrolyt (E) sowie unter Gasbildung (12), wobei beim Erstladevorgang die Batteriezelle in einen Ladestromkreis (LK) geschaltet ist und mit Gleichstrom geladen wird. Erfindungsgemäß ist der Erstladevorgang in einzelne Ladephasen (L) unterteilt, in denen sich jeweils eine SEI-Teilschicht (10) mit feinkörnigem Gefüge ausbildet. Die einzelnen Ladephasen (L) sind von Nichtladephasen (N) unterbrochen, in denen keine SEI-Bildung erfolgt, so dass die nach dem Erstladevorgang gebildete SEI-Grenzschicht (9) aus den übereinandergeschichteten SEI-Teilschichten (10) aus feinkörnigem Gefüge besteht, das eine Lithiumionen-Mobilität in der SEI-Grenzschicht (9) unterstützt.

## Beschreibung

Die Erfindung betrifft ein Verfahren zur Fertigung einer Lithiumionen-Batteriezelle nach dem Oberbegriff des Anspruches 1, des Anspruches 2 und des Anspruches 5.

Ein gattungsgemäßes Verfahren zur Fertigung einer Lithiumionen-Batteriepouchzelle weist einen Formationsprozess auf. Im Formationsprozess wird die Batteriezelle einem Erstladevorgang unterworfen, in dem sich die Lithiumionen in den Graphitstrukturen der zumindest einen Anode der Batteriezelle einlagern. Dadurch bildet sich eine SEI-Grenzschicht (solid-electrolyte-interface) an der Grenzfläche zum Elektrolyt. Die Bildung der SEI-Grenzschicht erfolgt unter Gasbildung. Im Erstladevorgang wird die Batteriezelle in einen Ladestromkreis geschaltet und mit Gleichstrom geladen.

Während des aus dem Stand der Technik Formationsprozesses treten die nachfolgend beschriebenen Problemfelder auf:
Ein erstes Problemfeld betrifft das grobkörnige Gefüge der SEI-Grenzschicht, wodurch deren Lithiumionen-Leitfähigkeit reduziert wird. Während des Ladevorgangs müssen die Lithiumionen zunächst durch die SEI-Grenzschicht wandern, bevor sie sich im aktiven Anodenmaterial einlagern. Die Lithiumionen bewegen sich zwischen den Korngrenzen des Gefüges in der SEI-Grenzschicht und nicht durch das Korn. Wenn die Korngröße der SEI-Grenzschicht größer ist, müssen die Lithiumionen einen längeren Weg entlang der einen Korngrenze nehmen, um sich einer benachbarten Korngrenze zu nähern. Jeder längere Weg der Lithiumionen verringert die Leitfähigkeit der Lithiumionen und erhöht somit den Innenwiderstand der Zelle. Normalerweise beträgt der Radius der Lithiumionen 90 pm (Pikometer), was etwa 1 A (Angström) entspricht. Andererseits beträgt die Dicke von SEI-Grenzschicht etwa 200A - 500 A. Da Lithiumionen nicht direkt durch die SEI-Masse, sondern nur durch die Korngrenzen hindurchgehen können, müssen sie eine größere Strecke zurücklegen als die SEI-Dicke beträgt. Wenn die Korngrenze größer ist, müssen die Lithiumionen mehr als das 5-fache der SEI-Dicke zurücklegen. Das bedeutet, dass die Lithiumionen eine Strecke von 1000 A bis 2500 A zurücklegen müssen, was etwa dem 1000-fachen ihres Radius entspricht. Bei kleiner SEI-Korngröße gibt es mehr Korngrenzen und daher mehr Möglichkeiten für den Transfer von Lithiumionen innerhalb der SEI-Grenzschicht.

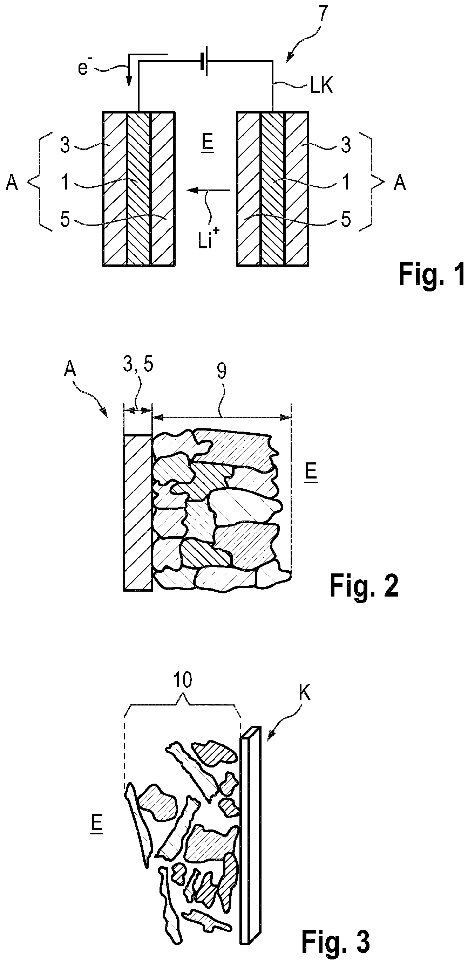

Die SEI-Grenzschicht ist eine dreidimensionale Struktur, die um aktives Graphitmaterial herum aufgebaut wird. Jeder Riss im Graphit öffnet eine neue Oberfläche, und auch dort wird SEI-Grenzschicht aufgebaut. Diese SEI-Ansammlungen erhöhen den Widerstand und verringern auch die lonenleitfähigkeit. Wie aus der Figur 2 hervorgeht, besteht die SEI-Schicht aus einer heterogenen Verbindung. Die SEI-Grenzschicht in der Nähe von Graphit ist hauptsächlich eine anorganische Verbindung wie LIF, Li₂O, Lithiumcarbonat und Lithiumhydroxid. Diese werden durch die Reaktion von Lithiumkationen aus Lithiumsalzen mit Fluoridanionen aus Lithiumsalzen oder Sauerstoff aus Wasserspuren hergestellt. Aufgrund ihrer dichten Schicht weist es einen höheren Widerstand gegen lonenbewegungen auf. Im elektrolytnahen Bereich wird die SEI-Grenzschicht hauptsächlich durch organische Verbindungen wie Reaktionsprodukte von Lösungsmitteln wie Ethylencarbonat gebildet. Diese organische Schicht reagiert mit HF-Säure und wandelt sich dann mit der Zeit in eine organische Schicht um. Das bedeutet, dass die Impedanz der SEI-Schicht mit der Zeit zunimmt. Derzeit gibt es keine Möglichkeit, die lonenleitfähigkeit zu erhöhen und die SEI-Impedanz zu verringern.

Ein zweites Problemfeld betrifft einen Gaseinschluss in der SEI-Grenzschicht sowie innerhalb der Graphitstrukturen der Anode. Während der Aufladung der Anode reduziert sich das Elektrolytlösungsmittel Propylencarbonat bei 0,8 V in Bezug auf die Li/Li+-Basisspannung. Da sich die SEI-Grenzschicht um den Graphit herum aufbaut, verhindert es das Entweichen von Propangas. Dies kann dazu führen, dass das Gas einen Innendruck in den Graphitschichten aufbaut und dann die Schichtstruktur des Graphits aufbrechen kann. Das bedeutet, dass kristalliner Graphit in amorphen oder niedrig kristallinen Graphit umgewandelt wird. Dadurch wird die Lebensdauer der Batterie sehr schnell verkürzt.

Es ist wichtig, dass dieses Gas entfernt wird, bevor es von der stark haftenden SEI-Schicht eingeschlossen wird. Die Gaseinschlüsse zerstören nicht nur die Graphitstruktur, sondern behindert auch die Diffusion der Lithiumionen im Graphit. Wenn Gaspartikel gezwungen werden, sich aus der SEI-Schicht herauszubewegen, entsteht ein leerer Raum innerhalb der SEI-Schicht und in diesem leeren Raum bildet sich eine neue SEI-Schicht, was einen Verlust von Lithiumionen aufgrund der Bildung einer neuen SEI-Schicht bedeutet. Wenn Gaspartikel in der SEI-Struktur eingeschlossen sind, erhöht sich der Widerstand für die lonenbewegung innerhalb der SEI. Dies bedeutet, dass die Aufladung langsamer erfolgt und auch zu einer Wärmeentwicklung führt.

Ein drittes Problemfeld betrifft eine ungleichmäßige Ladungsverteilung auf der Anode. Die Anode weist in gängiger Praxis eine Ableiterfolie (d.h. das Kupfersubstrat) auf, die beidseitig mit einer ersten Aktivmaterialschicht und mit einer zweiten Aktivmaterialschicht auf der gegenüberliegenden Seite der Ableiterfolie beschichtet ist. Die beiden mit Bezug auf die Ableiterfolie gegenüberliegenden ersten und zweiten Aktivmaterialschichten unterscheiden sich herstellungsbedingt in ihrer Fähigkeit zur Lithiumionen-Einlagerung.

Im aktiven Anodenmaterial befinden sich leitfähige Kohlenstoff- oder Kohlenstoff-Nanoröhren, die dem aktiven Material elektronische Leitfähigkeit verleihen. Diese elektronische Leitfähigkeit ist für die Bewegung der Elektronen im aktiven Anodenmaterial erforderlich. Im Herstellungsprozess wird die die Ableiterfolie zunächst auf der einen Seite und dann der anderen Seite beschichtet. Nach Beschichtung der ersten Seite erfolgt ein Trockenvorgang. Danach wird die andere Seite der Ableiterfolie beschichtet und getrocknet. Daraus resultiert, dass die Beschichtung auf der ersten Seite der Ableiterfolie einem zweimaligen Trocknungsvorgang unterworfen ist, während das aktive Material auf anderen Seite nur einmal getrocknet wird. Aufgrund der längeren Trocknungszeit wandert das Bindemittel im aktiven Material auf der einen Ableiterfolien-Seite schneller zur Oberfläche als auf anderen Ableitfolien-Seite. Das bedeutet, dass die Anodenoberfläche auf ersten Seite mehr Bindemittel und weniger leitfähigen Kohlenstoff enthält. Lithiumionen lagern sich dagegen mehr auf anderen Ableiterfolien-Seite ein, da diese Lithiumionen ihre Gegenelektronen schneller erhalten. Dies bedeutet, dass die Ladung auf beiden Seiten der Anodenoberfläche ungleichmäßig ist. Derzeit ist es nicht möglich, dies zu vermeiden, da die Verteilung des Leitkohlenstoffs auf der einen und auf der anderen Ableitfolie-Seite nicht gleichmäßig ist. D.h., wenn sich eine Anodenelektrode zwischen zwei Kathodenelektroden befindet, dann wird eine Anodenoberfläche schneller geladen als die andere Anodenoberfläche.

Ein viertes Problemfeld betrifft ein Aufbrechen der SEI-Grenzschicht aufgrund reduzierter Adhäsion zwischen heterogenen Komponenten der SEI-Grenzschicht. Die SEI-Schicht besteht aus einer anorganischen Komponente, die fest an dem aktiven Graphitmaterial haftet. In der anorganischen Komponente ist Lithium für die Herstellung von Verbindungen wie LiF, LizO und Li₂CO₃ verantwortlich. Die organische Schicht wird hauptsächlich durch die Reduktion des Elektrolyts erzeugt, ohne dass eine Verbindung mit Lithium entsteht. Sie besteht hauptsächlich aus Polyolefinen. Diese organische Schicht haftet weniger gut an den anorganischen Schichten und dem aktiven Material Graphit. Von daher kann sich die organische Schicht schon bei geringen Vibrationen und Temperaturen lösen. Vor diesem Hintergrund wäre es günstiger, mehr anorganische Komponenten als organische Komponenten bereitzustellen. Zumindest sollte die (gering haftende) organische Komponente wieder von einer (stärker haftenden) anorganischen Komponente umgeben sein.

Ein fünftes Problemfeld besteht darin, dass die kathodenseitige CEI-Grenzschicht mit der Zeit dicker wird, wodurch der innere Widerstand der Batteriezelle steigt. Einerseits entsteht die SEI-Grenzschicht auf der Anodenseite durch die Reduktion des Elektrolyts. Andererseits entsteht die CEI-Grenzschicht auf der Kathodenseite durch die Oxidation des Elektrolyts auf der Kathodenoberfläche. Die CEI-Grenzschicht besteht hauptsächlich aus anorganischen Komponenten wie Li₂O und LiF. Diese CEI-Grenzschicht nimmt mit jedem Lade-Entlade-Zyklus an Dicke zu, was zu einer Erhöhung der inneren Impedanz (Widerstand) der Zelle führt. Auch hier ist es wichtig, dass die CEI-Oberfläche ein feinkörniges Gefüge aufweist.

Aus der US 2021/0226193 A1 ein Verfahren zur galvanischen Abscheidung unter Verwendung gepulster Ströme zur Verbesserung der Gleichmäßigkeit der galvanisch abgeschiedenen Materialien an Festkörper-Festkörper-Grenzflächen bekannt. Es wurde gezeigt, dass Filme aus elektrolytisch abgeschiedenen Metallen an einer Festkörper-Grenzfläche stabil abgeschieden werden können, und zwar ohne Beschädigung des Festkörper-Elektrolyts. Aus der US 2021/0336239 A1 ein Batteriesystem bekannt, in dem Lithiummaterial auf den Anodenbereich einer Lithium-Sekundärbatteriezelle durch einen gepulsten Strom plattiert wird. Der gepulste Strom kann sowohl eine positive als auch eine negative Polarität haben. Aus der JP 2011-222438 A ist eine Polymerelektrolytmembran/Katalysator-Metall-Verbundelektrode bekannt, bei der ein Platinkatalysator durch Reduktion von Platin-Ionen abgeschieden wird.

Die Aufgabe der Erfindung besteht darin, ein Verfahren zur Herstellung einer Lithiumionen-Batteriezelle bereitzustellen, in dessen Formationsprozess die SEI-Grenzschicht bzw. die CEI-Grenzschicht im Hinblick auf eine im Vergleich zum Stand der Technik gesteigerte Lithiumionen-Mobilität erzeugbar sind.

Die Aufgabe ist durch die Merkmale des Anspruches 1, des Anspruches 2 oder des Anspruches 5 gelöst. Bevorzugte Weiterbildungen der Erfindung sind in den Unteransprüchen offenbart.

Die Erfindung geht von einem Verfahren zur Fertigung einer Lithiumionen-Batteriezelle, insbesondere einer Batteriepouchzelle, aus, die in einem Formationsprozess einem Erstladevorgang unterworfen wird. Im Erstladevorgang lagern sich Lithiumionen in den Graphitstrukturen der zumindest einen Anode der Batteriezelle ein. Dies erfolgt unter Bildung einer SEI-Grenzschicht an der Grenzfläche zum Elektrolyt sowie unter Gasbildung. Im Erstladevorgang ist die Batteriezelle in einem Ladestromkreis geschaltet und wird diese mit Gleichstrom geladen. Gemäß dem kennzeichnenden Teil des Anspruches 1 ist der Erstladevorgang in einzelne Ladephasen unterteilt. In den Ladephasen bildet sich jeweils eine SEI-Teilschicht mit feinkörnigem Gefüge aus. Die einzelnen Ladephasen sind von Nichtladephasen unterbrochen, in denen keine SEI-Bildung stattfindet. Auf diese Weise entsteht nach dem Erstladevorgang eine SEI-Grenzschicht aus den übereinander geschichteten SEI-Teilschichten aus feinkörnigem Gefüge, wodurch eine Lithiumionen-Mobilität in der SEI-Grenzschicht unterstützt wird.

Dem in der Beschreibungseinleitung genannten ersten Problemfeld wird durch Anlegen von pulsierendem Ladestrom entgegengetreten: Im Gegensatz zur Erfindung wird im Stand der Technik die SEI-Grenzschicht an der Anode durch Gleichstrom unter vorgeschriebener Temperatur und Druck erzeugt. Normalerweise variiert der Formationsprozess bei verschiedenen Batterieherstellern. Eines ist jedoch gemeinsam: Die Anode wird mit Gleichstrom von einem SOC zwischen 30 und 100% geladen. Erfindungsgemäß wird der Formationsprozess mit Impulsstrom durchgeführt. Das bedeutet, dass während einer Ladephase die Anode aufgeladen wird und in einer folgenden Nichtladephase die Aufladung der Anode unterbrochen wird oder sogar ein Entladevorgang stattfindet. Der Zweck dieser Vorgehensweise besteht darin: Wenn die Anode während eines ersten Pulses aufgeladen wird, baut sich SEI-Grenzschicht auf. Sobald der Puls aufhört, stoppt die SEI-Produktion. Beim nächsten Impuls wird die Anode erneut aufgeladen und somit wird erneut SEI-Grenzschicht gebildet. Aufgrund der Unterbrechung der SEI-Produktion ergibt sich eine SEI-Grenzschicht aus einer im Vergleich zum Stand der Technik kleineren Korngröße. Kleinere Korngröße bedeutet, dass die Gesamtkorngrenze größer ist. Der Kerngedanke besteht also darin, anstelle eines Permanent-Gleichstroms zur Aufladung der Anodenoberfläche mit Lithium einen Impulsstrom zu verwenden. Die Impulsstrombreite kann je nach der erforderlichen Korngröße der SEI-Grenzschicht eingestellt werden.

Ein zweiter Aspekt der Erfindung betrifft die Anwendung einer Druckentspannungsphase während des Formationsprozesses. Die Impulsladung sollte mindestens im Spannungsbereich von 1 V (wo der Elektrolyt zu reduzieren beginnt) in Bezug auf die Li/Li+ Spannung beginnen. Die Ladung sollte bis 0 Volt fortgesetzt werden (wo die vollständige Einlagerung der Lithiumionen in den Graphit abgeschlossen ist, was einen SOC von 100% ergibt). Nach einigen Lade- und Nichtladezyklen wird der Druck auf der Seite der Zelle vorübergehend abgelassen. Auf diese Weise kann eingeschlossenes Gas aus der Elektrodenoberfläche austreten und in die Gastasche (in der Pouch-Zelle) gelangen. Die Gasbildung ist stärker, sobald die Spannung von 0,8 in Bezug auf Li/Li+ erreicht ist. Die Druckentspannungsphase beginnt nach Erreichen dieser Spannung. Während der Druckentlastung findet keine Aufladung statt. Der Druck kann auf null oder auf einen Mindestwert reduziert werden, so dass eingeschlossenes Gas freigesetzt werden kann. Während der drucklosen Phase kann man eine Rolle an den Seiten der Zelle haben, die sich an den Seiten von oben nach unten bewegt, so dass das Gas in den Gastaschenbereich gelangen kann.

Ein dritter Aspekt der Erfindung betrifft den Sachverhalt, dass die Aufladung der Aktivmaterialschicht auf der einen Ableiterfolienseite und die die Aufladung der Aktivmaterialschicht auf der anderen Ableiterfolienseite mit unterschiedlichen Stromimpulsen erfolgt. Im Elektroden/Separatorstapel ist die Anode unter Zwischenlage eines Separators zwischen zwei Kathoden angeordnet. Jede Kathode ist mit einem anderen Anodenstromabnehmer verbunden. Daher wird während des ersten Pulses nur eine Anodenelektrode-Oberfläche aufgeladen, da die Kathode gegenüber dieser Kathode angeschlossen ist. Wenn der Stromimpuls in die Nicht-Ladephase übergeht, werden die Kathode der anderen Seite und die andere Oberfläche der Anode geladen. Auf diese Weise werden die Aktivmaterialschichten auf den beiden Ableiterfolien-Seiten unabhängig voneinander geladen. Beide können mittels Impulsladung geladen werden. Die Phase des Nichtladestroms verlängert die Gesamtladezeit der Anode nicht.

Ein vierter Aspekt der Erfindung betrifft eine Druckentlastungsphase nach erfolgten Ladephasen. Während des Aufladens der Batterie wird die Anodenoberfläche reduziert, da die Lithiumionen Elektronen aufnehmen. Das bedeutet, dass der Elektrolyt in Kontakt mit dem Elektrolyt reduziert wird. Auf der anderen Seite unterliegt die Kathode während des Ladens der Batterie einer Oxidation. Der Elektrolyt, der mit der Kathode in Kontakt ist, wird ebenfalls oxidiert. Der Elektrolyt erzeugt während der Ladung die SEI-Grenzschicht auf der Anodenoberfläche und die CEI-Grenzschicht auf der Kathode. Die SEI-Grenzschicht wird durch die Reduktion des Elektrolyts auf der Anode erzeugt. Auf die gleiche Weise wird die CEI-Grenzschicht durch die Oxidation des Elektrolyten auf der Kathodenoberfläche während des Ladens erzeugt. Bei der Entladung geschieht genau das Gegenteil. Die Anode gibt Elektronen ab und wird oxidiert. Die Kathode nimmt Elektronen auf und wird reduziert. Eine SEI-Schicht und eine CEI-Schicht werden daher an der gegenüberliegenden Elektrode in der Ladungsphase gebildet. Es ist bekannt, dass die CEI-Schicht auf der Kathode mit jedem Zyklus an Größe zunimmt. Ebenso hat die SEI-Grenzschicht eine organische Komponente, die nicht so stark haftet. Um diese beiden Probleme zu überwinden, erfolgt eine erfindungsgemäße Stromentladungsphase während des Formationsprozesses. Das bedeutet, dass nach einigen Zyklen der Aufladung der Zelle durch Impulsstrom eine Entladungsphase vorgesehen ist, so dass einige Lithiumionen von der Anode zur Kathode zurückwandern. Das heißt, während der Ladephase kann ein erstes Ladegerät für die eine Ableiterfolien-Seite und ein zweites Ladegerät für die andere Ableiterfolien-Seite bereitgestellt sein, die alternierend im Einsatz sind. Während der kurzen Entladephase befindet sich anstelle des Ladegeräts eine Last (bzw. ein Entladegerät) zwischen Anode und Kathode. Diese Last entlädt die Anode. Das bedeutet, dass nur wenige Lithiumionen von der Anode zur Kathode wandern. Während dieses Entladungsprozesses bewegen sich die Lithiumionen durch die SEI-Grenzschicht und schaffen Austrittsöffnungen durch die SEI-Grenzschicht. Sie bilden nun ein CEI-Produkt in Form einer anorganischen Komponente auf der Außenseite der SEI-Grenzschicht. Da die anorganische Komponente besser haftet als die organische Komponente, ist die Kombination von SEI-Schicht und CEI-Schicht vorteilhafter. Diese kombinierte SEI/CEI-Schicht besteht in erster Linie aus anorganischen Bestandteilen und hat eine stärkere Haftung und damit eine höhere Festigkeit gegen Vibrationen. Auf der Kathodenseite wird während der Ladephase eine CEI-Schicht aufgebaut, und während der Entladephase wird eine SEI-Schicht gebildet. Diese SEI-Schicht enthält eine organische Komponente, die nicht stark haftend ist. Das bedeutet, dass die CEI-Schicht nicht dicker wird und somit die neue Kombination aus CEI- und SEI-Grenzschicht auf der Kathode eine geringere Impedanz aufweist als die rein anorganische CEI-Schicht. Es ist möglich, nach der Bildung der kombinierten SEI- und CEI-Schicht eine kleine Vibration einzubauen, so dass die schwachen Komponenten brechen und sich im Elektrolyt als Lithiumsalze auflösen können.

Die wesentlichen Unterschiede zwischen der vorliegenden Erfindung und dem zum Stand der Technik sind wie folgt zusammengefasst: Das Aufladen der Zellen während der Formation erfolgt durch pulsierenden Strom von einem externen Ladegerät. Aufgrund dieser kleinen Korngröße wird SEI-Grenzschicht aufgebaut, mittels der die lonenmobilität erhöht ist, da sich die Ionen nur entlang der Korngrenzen bewegen können. Die Anode besteht aus zwei Stromabnehmern. Durch eine Lasche ist sie elektrisch mit der Kathode verbunden, die der Aktivmaterialschicht der einen Stromableiterfolien-Seite gegenüberliegt. Durch die andere Lasche ist sie elektrisch mit der Kathode verbunden, die der Aktivmaterialschicht der anderen Stromableiterfolien-Seite der Anode gegenüberliegt. Die beidseitigen Aktivmaterialschichten werden in getrennten Impulsen aufgeladen. Auf diese Weise hat jede Oberfläche eine Lade- und eine Nichtladezeit. Außerdem wird die Gesamtladezeit nicht verlängert. Dies würde zu einer gleichmäßigen Ladung auf beiden Oberflächen und gleichzeitig zu einer feinkörnigen SEI-Grenzschicht führen. Es gibt eine kleine Druckentspannungsphase, die nach einigen Impulsladezyklen durchgeführt wird, um eingeschlossenes Gas zu entfernen. Nach einigen Ladezyklen folgt eine Entladungsphase, in der einige Lithiumionen wieder zur Kathode zurückwandern. Dies geschieht, damit das entweichende Lithium Austrittsflächen in der SEI-Grenzschicht schafft und auch dazu beiträgt, die CEI über der SEI-Grenzschicht aufzubauen. Diese Kombination aus SEI-Grenzschicht und CEI haftet stärker am aktiven Material der Anode. Lade- und Entladephase helfen auch auf der Kathodenseite. Hier wird eine SEI-Schicht über eine CEI-Schicht gebildet. Dies reduziert den weiteren Anstieg der anorganischen CEI-Schicht. Die Vibration wird nach der Entladungsphase angewandt, um lose anhaftende organische Komponenten in der SEI-Grenzschicht und in der CE-Schicht zu entfernen. Diese organischen Bestandteile lösen sich im Elektrolyt wieder auf. Die beidseitig der Ableiterfolien-Seite befindlichen Aktivmaterialschichten können trotz der ungleichmäßigen Verteilung des Bindemittels und des leitfähigen Kohlenstoffs gleichmäßig aufgeladen werden. Dies ist möglich, da beide Aktivmaterialschichten in getrennten Impulsen aufgeladen werden. Dies ist möglich, wenn die Anode zwei Stromabnehmer hat. Die oben beschriebenen Verfahrensmerkmale des Formationsprozess können in beliebiger Kombination zusammen oder einzeln durchgeführt werden. Die wichtigsten Prozesse in der erfindungsgemäßen Formation sind die impulsartige Aufladung, die Druckentspannung, die Entladephase und die Vibration.

Die Vorteile der Erfindung sind wie folgt zusammengefasst: Die SEI-Grenzschicht ermöglicht eine höhere lonenbeweglichkeit, da aufgrund der kleinen Korngrößenstruktur mehr Korngrenzen vorhanden sind. Beide Aktivmaterialschichten der Anode werden gleichmäßig aufgeladen. Die SEI-Grenzschicht stellt eine verbesserte Adhäsion bereit, die bei Vibrationen nicht zusammenbricht. Eingeschlossenes Gas in Graphit und SEI-Grenzschicht wird während der Druckentspannungsphase entfernt. Die mit diesem Verfahren hergestellten CEI-Schicht weist eine geringere Impedanz auf. Dies führt zu einer schnelleren lonenbewegung. In der Vibrationsphase werden lose anhaftende SEI- und CEI-Partikel entfernt. Diese lösen sich dann schließlich im Elektrolyt auf. Das bedeutet, dass die SEI-Grenzschicht und die CEI-Schicht, die nach der Formation gebildet werden, bei mechanischen Vibrationen viel widerstandsfähiger sind. Sowohl Anode als auch Kathode verfügen über eine Schutzschicht, die aus einer Kombination von CEI- und SEI-Schicht besteht. Dies bedeutet, dass beide Elektroden während der Lade- und Entladephase vollständig geschützt sind. SEI-Grenzschicht wird ohne übermäßige Zusätze im Elektrolyt gebildet. Der irreversible Lithiumionen-Verlust während der SEI-Bildung ist geringer, da die gebildete SEI-Grenzschicht eine geringere effektive Dicke aufweist, aber die Elektrodenoberfläche gleich gut oder besser gegen Elektrolytangriffe schützt. Jede Elektrodenfläche wird unabhängig aufgeladen. Dies bedeutet, dass eine höhere Kapazität in der Anode erreicht werden kann und auch die Gefahr einer Überkapazität in einer Fläche vermieden werden kann. Es ergibt sich ein hoher Wirkungsgrad der Zelle im ersten Zyklus. Die Impulsladung verlängert die Gesamtladezeit der Formation nicht, obwohl sie keine Ladephase hat. Kurz gesagt, durch dieses modifizierte Formationsverfahren werden hochwertige SEI-Grenzschicht (hohe lonenbeweglichkeit aufgrund großer Korngrenzen, hohe Adhäsion, niedrige Impedanz und geringe Dicke) erzeugt.

Nachfolgend werden wesentliche Erfindungsaspekte nochmals im Einzelnen hervorgehoben: So wird im Formationsprozess wird die Batteriezelle in einer Formationsstation mittels zumindest eines Druckelementes (zum Beispiel eine Druckplatte) mit einer Druckkraft beaufschlagt und dann bei konstanter Temperatur und relativ niedriger Ladegeschwindigkeit geladen. Im Erstladevorgang dehnt sich die Zelle aus. Die Druckplatte sorgt dabei für eine gleichmäßige Kompression der Batteriezelle. Zur Vermeidung von Gaseinschlüssen in der SEI-Grenzschicht kann erfindungsgemäß die Druckbeaufschlagung mit zumindest einer Druckentlastung unterbrochen werden. Dadurch kann das in der SEI-Grenzschicht gebildete Gas freigesetzt werden und sich zum Beispiel in einer Gastasche der Batteriepouchzelle sammeln. Zur Freisetzung des Gases aus der SEI-Grenzschicht kann zudem ein Walzenpaar mit zwischengeordnetem Klemmspalt bereitgestellt sein, durch den die Batteriezelle geführt wird.

Bevorzugt ist es, wenn während der Druckentlastung der Erstladevorgang gestoppt ist. In diesem Fall würde ein dadurch entstehender ungleichmäßiger Kontakt zwischen dem Aktivmaterial und zum Beispiel einer Ableiterfolie nicht zu einer Beeinträchtigung des Erstladevorgangs führen.

Die Batteriezelle weist in gängiger Praxis einen Elektroden-/Separatorstapel auf, in dem abwechselnd eine Kathode sowie eine Anode mit jeweils zwischengeordnetem Separator in einer Stapelrichtung übereinander gestapelt sind. Die Anode weist üblicherweise eine Ableiterfolie auf, die beidseitig mit einer ersten Aktivmaterialschicht und mit einer gegenüberliegenden zweiten Aktivmaterialschicht beschichtet ist. Dies erfolgt in einem Beschichtungsprozess, in dem in einem ersten Teilschritt eine viskose Ausgangskomponente des Anoden-Aktivmaterials auf die Stromableiterfolie aufgebracht wird und diese anschließend in einer Trockenstation getrocknet wird. Anschließend folgt ein zweiter Teilschritt, in dem die Ausgangskomponente der zweiten Aktivmaterialschicht auf die Folie aufgebracht wird und diese in der Trockenstation getrocknet wird. Herstellungsbedingt ist daher die erste Aktivmaterialschicht einem doppelten Trocknungsvorgang unterworfen, während die zweite Aktivmaterialschicht nur einfach getrocknet wird. Dieser Sachverhalt hat Folgen für den Materialaufbau der beiden Aktivmaterialschichten: So wandert in der ersten Aktivmaterialschicht der darin enthaltene Binder - im Vergleich zur zweiten Aktivmaterialschicht - verstärkt zur Aktivmaterialschicht-Oberfläche. An der Oberfläche der ersten Aktivmaterialschicht erhöht sich daher der Anteil an nicht leitfähigem Binder, während sich der Anteil an leitfähigem Kohlenstoff reduziert. Dies führt insgesamt dazu, dass sich die ersten und zweiten Aktivmaterialschichten in ihrer Fähigkeit zur Lithiumionen-Einlagerung unterscheiden.

Zum Ausgleich der unterschiedlich ausgeprägten Fähigkeit zur Lithiumionen-Einlagerung ist gemäß dem kennzeichnenden Teil des Anspruches der Ladestromkreis in einen ersten Teilladestromkreis und in einem zweiten Teilladestromkreis unterteilt. Mit Hilfe der beiden Teilladestromkreise können die erste und die zweite Aktivmaterialschicht der Anode unabhängig voneinander sowie insbesondere mit unterschiedlichen Ladeströmen aufgeladen werden, wodurch in den beiden Aktivmaterialschichten eine gleichmäßige Ladungsverteilung erzielbar ist.

In einer technischen Umsetzung ist im ersten Teilladestromkreis ein erstes Ladegerät, die erste Aktivmaterialschicht sowie eine der ersten Aktivmaterialschicht zugewandten Kathode eingebunden. Demgegenüber ist im zweiten Teilladestromkreis ein zweites Ladegerät, die zweite Aktivmaterialschicht und eine der zweiten Aktivmaterialschicht zugewandte Kathode eingebunden.

Bevorzugt ist es, wenn während der Ladephase des ersten Teilstromkreises sich der zweite Teilstromkreis in seiner Nichtladephase befindet. Umgekehrt befindet sich während der Ladephase des zweiten Teilstromkreises sich der erste Teilstromkreis in seiner Nichtladephase.

In einer weiteren Ausführungsvariante kann im Erstladevorgang nach erfolgter Durchführung zumindest einer Ladephase eine Entladephase folgen. In der Entladephase bewegen sich die während der Ladephase im Anoden-Aktivmaterial eingelagerten Lithiumionen zurück zur Kathode. Dies kann insbesondere unter Bildung von Austrittsporen in der SEI-Schicht des Anoden-Aktivmaterials erfolgen, wodurch die Lithiumionen-Mobilität in der SEI-Schicht erhöht wird.

Zudem wird in der Entladephase eine CEI-Schicht in Form anorganischer Komponenten auf der anodenseitigen SEI-Grenzschicht gebildet. Auf diese Weise wird an der Anode eine kombinierte SEI/CEI-Grenzschicht mit gesteigerter Adhäsionsfähigkeit gebildet.

Im Erstladevorgang des Formationsprozesses wird auf dem Kathoden-Aktivmaterial eine CEI-Grenzschicht an der Grenzfläche zum Elektrolyt gebildet. Während der oben erwähnten Entladephase baut sich eine SEI-Schicht auf der kathodenseitigen CEI-Grenzschicht auf. Diese besteht aus organischen Komponenten mit geringer Adhäsionskraft. Dadurch bildet sich eine kombinierte CEI/SEI-Schicht, die aufgrund geringer Adhäsionskraft sich im Elektrolyt auflöst, ohne die Gesamtdicke der CEI-Grenzschicht zu erhöhen.

Nachfolgend sind Ausführungsbeispiele der Erfindung anhand der beigefügten Figuren beschrieben.

Es zeigen:

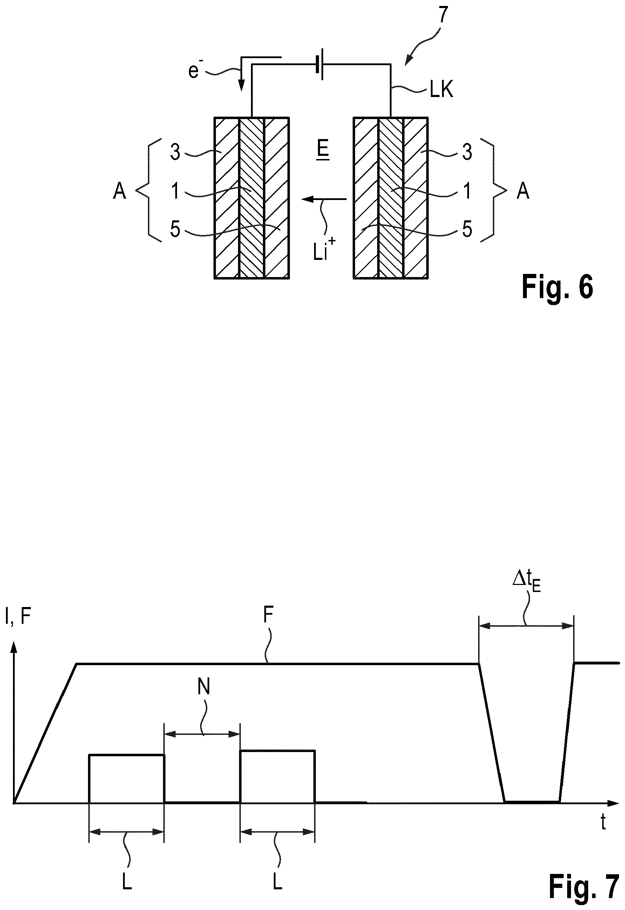

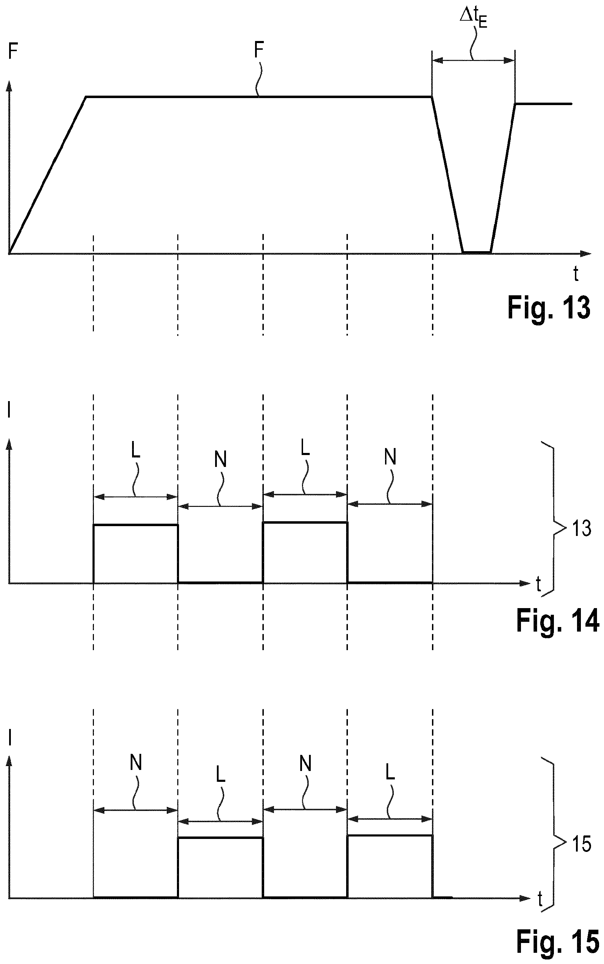

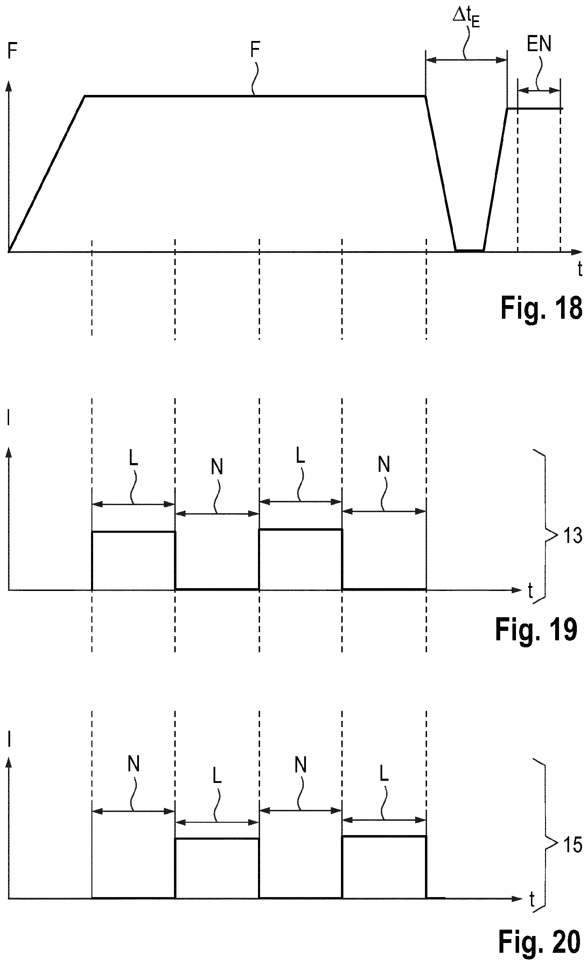

- Figuren 1 bis 21: unterschiedliche Ansichten, anhand derer Formationsprozesse während der Fertigung einer Batteriepouchzelle beschrieben sind.

In der Figur 1 ist eine Anode A sowie eine Kathode K angedeutet, die Bestandteile eines Elektroden-/Separatorstapels einer Batteriepouchzelle sind. In dem Elektroden-/Separatorstapel sind in einer Stapelrichtung abwechselnd Anoden A sowie Kathoden K mit jeweils zwischengeordnetem (nicht gezeigtem) Separator übereinander gestapelt. Die Elektroden-/Separatoranordnung ist zudem mit einem Elektrolyt E (Figuren 1, 2 oder 3) benetzt. Gemäß der Figur 1 weist die Anode A eine Stromableiterfolie 1 auf, die beidseitig mit einer ersten Aktivmaterialschicht 3 und einer gegenüberliegenden zweiten Aktivmaterialschicht 5 beschichtet ist. Analog dazu weist auch die Kathode K eine Stromableiterfolie 1 auf, die beidseitig mit einer ersten Aktivmaterialschicht 3 und einer zweiten Aktivmaterialschicht 5 beschichtet ist.

In gängiger Praxis wird die Batteriezelle nach erfolgter Einhausung des Elektroden-/Separatorstapels in das Zellgehäuse sowie nach Injektion des Elektrolyts E in das Zellgehäuse zu einer Formationsstation geführt, in der ein in der Figur 1 angedeuteter Erstladevorgang durchgeführt wird. Zur Durchführung des Erstladevorgangs sind die Anode A, die Kathode K sowie ein Ladegerät 7 in einem Ladestromkreis LK eingebunden. Das Ladegerät 7 verschiebt die Elektronen von der Kathode K zur Anode A. Gleichzeitig bewegen sich die Lithiumionen von der Kathode K im Elektrolyt E über den nicht gezeigten Separator zur Anode A. Die Lithiumionen lagern sich in den Graphitstrukturen der Anode A ein, und zwar unter Bildung einer SEI-Grenzschicht 9, die in der Figur 2 angedeutet ist. Gleichzeitig bildet sich auf dem Kathoden-Aktivmaterial eine CEI-Grenzschicht 11 (Figur 3) an der Grenzfläche zum Elektrolyt E.

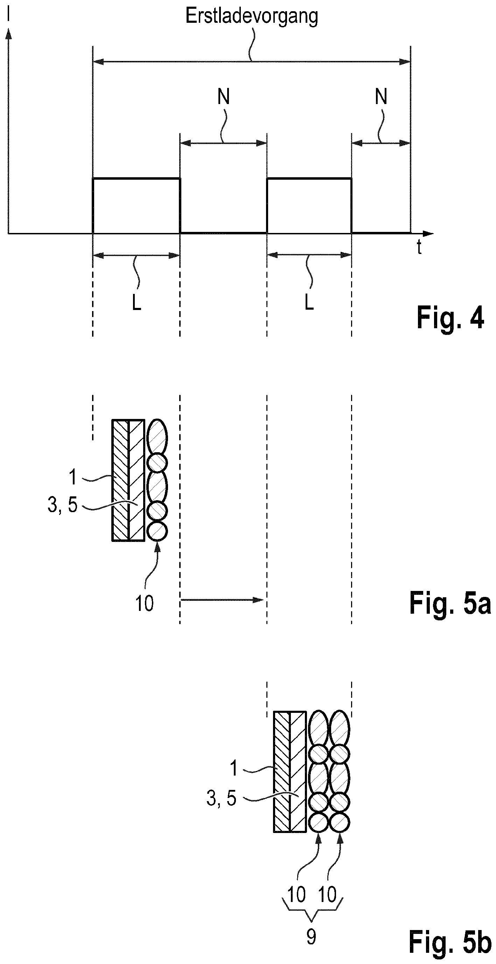

Wie aus dem Diagramm der Figuren 4 sowie 5a und 5b hervorgeht, erfolgt der Erstladevorgang nicht mit durchgängig gleichbleibendem Ladestrom I. Vielmehr ist der Erstladevorgang in einzelne Ladephasen L aufgeteilt, die von Nichtladephasen N unterbrochen sind. In den Ladephasen L bildet sich jeweils eine SEI-Teilschicht 10 mit feinkörnigem Gefüge aus, während in den Nichtladephasen N keine SEI-Bildung erfolgt. Nach Durchführung des Erstladevorgangs wird somit eine SEI-Grenzschicht 9 (Figur 5b) aus den übereinander geschichteten SEI-Teilschichten 10 aus feinkörnigem Gefüge erzeugt, das eine Lithiumionen-Mobilität in der SEI-Grenzschicht 9 unterstützt.

Anhand der Figuren 6 bis 11 ist ein Formationsprozess gemäß einem weiteren Ausführungsbeispiel beschrieben. Wie aus dem Diagramm der Figur 7 hervorgeht, wird die Batteriezelle während des Erstladevorgangs mit Hilfe eines nicht gezeigten Druckelements mit einer Druckkraft F beaufschlagt, um eine gleichmäßige Kompression der Batteriepouchzelle zu gewährleisten. In dem Diagramm der Figur 7 ist die Druckbeaufschlagung während des Erstladevorgangs nicht durchgängig konstant, sondern vielmehr mit zumindest einer Druckentlastung Δt_{E} unterbrochen. Mit Hilfe der Druckentlastung wird das sich in der SEI-Grenzschicht 9 gebildete Gas 12 (Figur 11) freigesetzt und kann sich in zum Beispiel einer Gastasche der Batteriepouchzelle sammeln.

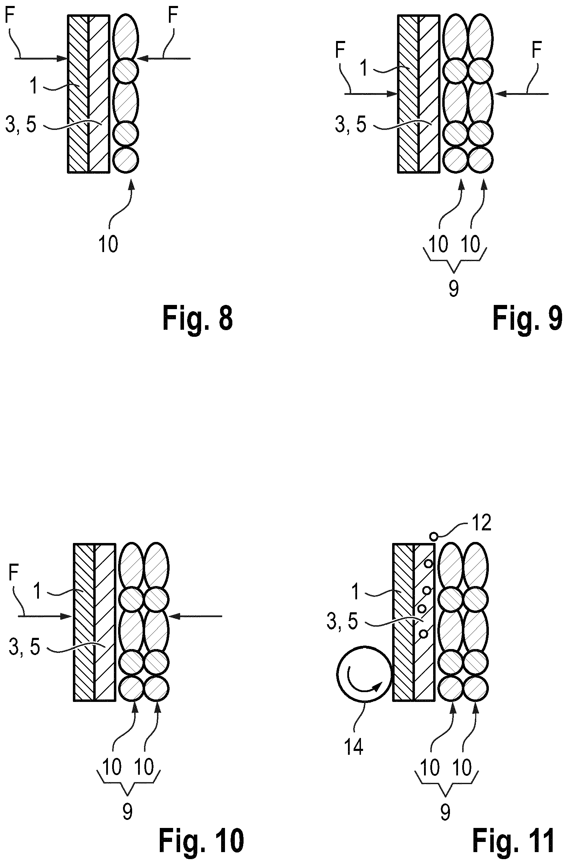

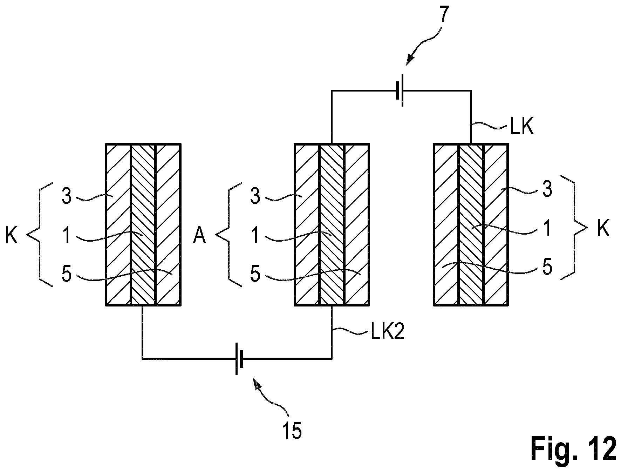

In den Figuren 12 bis 15 ist ein Formationsprozess gemäß einem weiteren Ausführungsbeispiel veranschaulicht. Der Formationsprozess beruht auf dem Sachverhalt, dass sich herstellungsbedingt die erste und die zweite Aktivmaterialschicht 3, 5 der Anode A in ihrer Fähigkeit zur Lithiumionen-Einlagerung unterscheiden. Zum Ausgleich der unterschiedlich ausgeprägten Fähigkeit zur Lithiumionen-Einlagerung ist in den Figuren 12 bis 15 der Ladestromkreis LK in einen ersten Teilladestromkreis LK1 und in einen zweiten Teilladestromkreis LK2 unterteilt. Mit deren Hilfe können die erste Aktivmaterialschicht 3 und die zweite Aktivmaterialschicht 5 der Anode A unabhängig voneinander sowie insbesondere mit unterschiedlichen Ladeströmen I aufgeladen werden. Hierzu ist im ersten Teilladestromkreis LK1 ein erstes Ladegerät 13, die erste Aktivmaterialschicht 3 sowie eine der ersten Aktivmaterialschicht 3 zugewandte Kathode K eingebunden. In gleicher Weise ist im zweiten Teilladestromkreis LK2 ein zweites Ladegerät 15, die zweite Aktivmaterialschicht 5 und eine der zweiten Aktivmaterialschicht 5 zugewandte Kathode K eingebunden. Während der Ladephase L des ersten Teilstromkreises LK1 befindet sich der zweite Teilstromkreis LK2 in seiner Nichtladephase N, wie aus dem Diagramm der Figur 9 hervorgeht. Umgekehrt befindet sich während der Ladephase L des zweiten Teilstromkreises LK2 sich der erste Teilstromkreis LK1 in seiner Nichtladephase N.

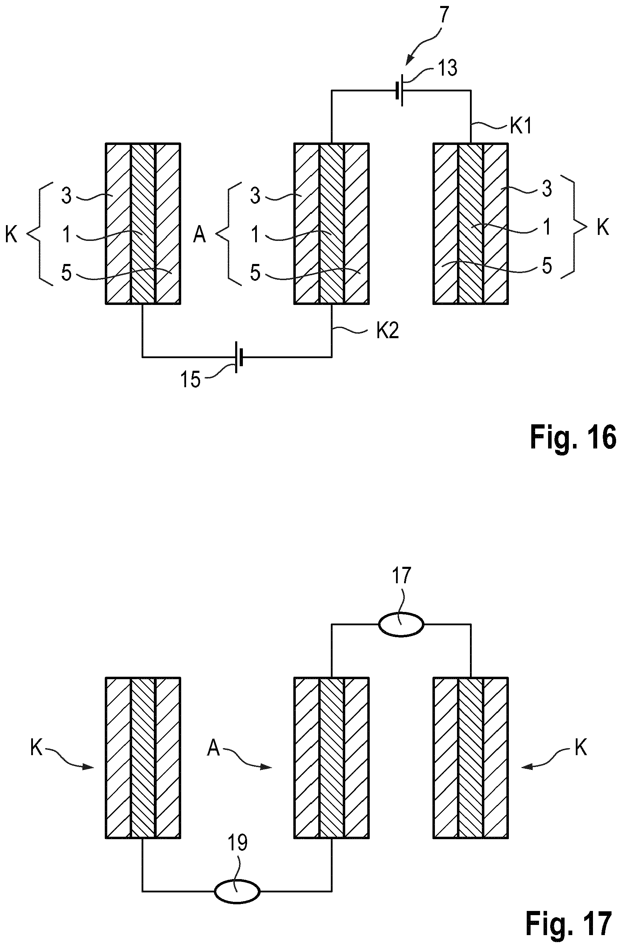

Anhand der Figuren 16 bis 20 ist ein weiterer Formationsprozess veranschaulicht. Dieser beruht auf dem Sachverhalt, dass im Stand der Technik (d.h. obiges fünftes Problemfeld) die kathodenseitige CEI-Grenzschicht 11 mit der Zeit dicker wird, wodurch der innere Widerstand der Batteriezelle steigt. Einerseits entsteht die SEI-Grenzschicht 9 auf der Anodenseite durch die Reduktion des Elektrolyts E. Andererseits entsteht die CEI-Grenzschicht 11 auf der Kathodenseite durch die Oxidation des Elektrolyts E auf der Kathodenoberfläche. Die CEI-Grenzschicht 9 besteht hauptsächlich aus anorganischen Komponenten wie LizO und LiF. Diese CEI-Grenzschicht 11 nimmt mit jedem Lade-Entlade-Zyklus an Dicke zu, was zu einer Erhöhung der inneren Impedanz (Widerstand) der Zelle führt. Auch hier ist es wichtig, dass die CEI-Oberfläche ein feinkörniges Gefüge aufweist.

Vor diesem Hintergrund folgt im dargestellten Erstladevorgang der Figuren 16 bis 20 nach Durchführung der Ladephasen L sowie nach erfolgter Druckentlastung Δt_{E} eine Entladephase EN. In der Entladephase EN bewegen sich die während der Ladephasen L im Anoden-Aktivmaterial eingelagerten Lithiumionen zurück zur Kathode K. Dies erfolgt unter Bildung von Austrittsporen in der SEI-Grenzschicht 9 des Anoden-Aktivmaterials, wodurch eine Lithiumionen-Mobilität gesteigert wird. In der Entladephase EN wird zudem eine CEI-Schicht 11 in Form anorganischer Komponenten auf der anodenseitigen SEI-Grenzschicht 9 gebildet. Die anorganischen Komponenten stellen - im Vergleich zu organischen Komponenten - eine starke Adhäsionskraft bereit. Dadurch wird an der Anode A eine kombinierte SEI/CEI-Grenzschicht mit gesteigerter Adhäsionsfähigkeit gebildet.

Gleichzeitig dazu baut sich in der oben genannten Entladephase EN eine SEI-Zusatzschicht auf der kathodenseitigen CEI-Grenzschicht 11 auf. Die SEI-Zusatzschicht besteht aus organischen Komponenten mit geringer Adhäsionskraft. Auf diese Weise bildet sich eine kombinierte CEI-/SEI-Schicht, die sich aufgrund geringer Adhäsionskraft im Elektrolyt E auflösen kann, ohne die Gesamtdicke der CEI-Grenzsicht 11 zu erhöhen.

In der Figur 17 wird die Entladephase EN realisiert durch ein erstes und ein zweites Entladegerät 17, 19, die - anstelle der Ladegeräte 13, 15 - in die Ladestromkreise LK1, LK2 geschaltet sind. Mit Hilfe der Entladegeräte 17, 19 können die erste Aktivmaterialschicht 3 und die zweite Aktivmaterialschicht 5 der Anode A unabhängig voneinander sowie insbesondere mit unterschiedlichen Entladeströmen I entladen werden. Während einer Entladephase im ersten Teilstromkreises LK1 befindet sich der zweite Teilstromkreis K2 in seiner Nichtentladephase. Umgekehrt befindet sich während der Entladephase des zweiten Teilstromkreises K2 der erste Teilstromkreis LK1 in seiner Nichtladephase.

In den vorstehenden Figuren sind Ausführungsbeispiel angedeutet, in denen die beiden Aktivmaterialschichten 5 der Anode A unabhängig voneinander aufgeladen werden können. Hierzu weist die Anode A jeweils zwei Stromkollektoren auf. Diese können bei jedem Impuls unterschiedlich aktiviert werden.

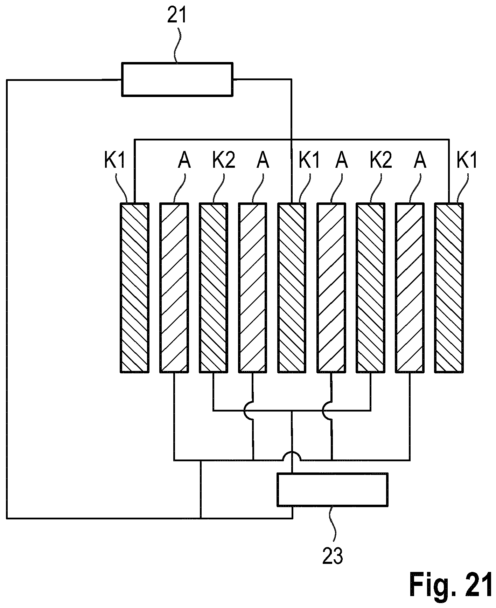

Ein ähnlicher Sachverhalt ist auch in dem Ausführungsbeispiel der Figur 21 angedeutet. In der Figur 21 ist ein Elektroden-/Separatorstapel gezeigt, der in Stapelrichtung abwechselnd erste Kathoden K1 und zweite Kathoden K2 aufweist, zwischen denen jeweils Anoden A positioniert. Die zwischen den Elektroden K1, K2, A angeordneten Separatoren sind nicht dargestellt. Die ersten Kathoden K1 sind zusammen mit einem ersten Ladegerät 21 in einem ersten Ladestromkreis geschaltet, während die zweiten Kathoden K2 zusammen mit einem zweiten Ladegerät 23 in einem zweiten Ladestromkreis geschaltet sind. Wenn das erste Ladegerät 23 aktiv ist, wird eine Aktivmaterialschicht 5 der jeweiligen Anode A durch die gegenüberliegende Kathode K1 aufgeladen. Wenn das zweite Ladegerät 23 aktiv ist, wird die gegenüberliegende Aktivmaterialschicht 5 durch die gegenüberliegende Kathode K2 aufgeladen. Die beiden Ladegeräte 21, 23 sind nicht gleichzeitig im Ladebetrieb.

Beim Laden können abwechselnd die Kathoden K1, K2 zusammengeschaltet werden. Das bedeutet, dass Kathoden K, die auf beiden Seiten der Anode A platziert sind, einen unterschiedlichen Impuls erhalten. Auf diese Weise werden die Aktivmaterialschichten 5 an beiden Seiten der Anode A unabhängig voneinander aufgeladen.

### Bezugszeichenliste

- 1: Stromableiterfolie
- 3: erste Aktivmaterialschicht
- 5: zweite Aktivmaterialschicht
- 7: Ladegerät
- 9: SEI-Grenzschicht
- 10: SEI-Teilschicht
- 11: CEI-Grenzschicht
- 12: Gas
- 13: erstes Ladegerät
- 15: zweites Ladegerät
- 17, 19: Entladegeräte
- 21: erstes Ladegerät
- 23: zweites Ladegerät
- E: Elektrolyt
- L: Ladephase
- F: Druckkraft
- N: Nichtladephase
- EN: Entladephase
- Δt_{E}: Druckentlastung
- LK: Ladestromkreis
- LK1, LK2: Teilladestromkreise
- I: Ladestrom

## Patentansprüche

1. Verfahren zur Fertigung einer Lithiumionen-Batteriezelle, insbesondere Batteriepouchzelle, mit einem Formationsprozess, in dem die Batteriezelle einem Erstladevorgang unterworfen wird, in dem sich Lithiumionen in Aktivmaterial (3, 5) der zumindest einen Anode (A) der Batteriezelle einlagern, und zwar unter Bildung einer SEI-Grenzschicht (9) an der Grenzfläche zum Elektrolyt (E) sowie unter Gasbildung (12), wobei beim Erstladevorgang die Batteriezelle in einen Ladestromkreis (LK) geschaltet ist und mit Gleichstrom geladen wird, **dadurch gekennzeichnet, dass** der Erstladevorgang in einzelne Ladephasen (L) unterteilt ist, in denen sich jeweils eine SEI-Teilschicht (10) mit feinkörnigem Gefüge ausbildet, und dass die einzelnen Ladephasen (L) von Nichtladephasen (N) unterbrochen sind, in denen keine SEI-Bildung erfolgt, so dass die nach dem Erstladevorgang gebildete SEI-Grenzschicht (9) aus den übereinandergeschichteten SEI-Teilschichten (10) aus feinkörnigem Gefüge besteht, das eine Lithiumionen-Mobilität in der SEI-Grenzschicht (9) unterstützt.

2. Verfahren, insbesondere nach Anspruch 1, zur Fertigung einer Lithiumionen-Batteriezelle, insbesondere Batteriepouchzelle, mit einem Formationsprozess, in dem die Batteriezelle einem Erstladevorgang unterworfen wird, in dem sich Lithiumionen in Aktivmaterial (3, 5) der zumindest einen Anode (A) der Batteriezelle einlagern, und zwar unter Bildung einer SEI-Grenzschicht (9) an der Grenzfläche zum Elektrolyt (E) sowie unter Gasbildung (12), wobei beim Erstladevorgang die Batteriezelle in einen Ladestromkreis (LK) geschaltet ist und mit Gleichstrom geladen wird, wobei im Formationsprozess die Batteriezelle in einer Formationsstation mittels eines Druckelements mit einer Druckkraft (F) beaufschlagt wird, wodurch eine Kompression der Batteriezelle gewährleistet ist, **dadurch gekennzeichnet, dass** zur Vermeidung von Gaseinschlüssen (12) in der SEI-Grenzschicht (9) die Druckbeaufschlagung mit zumindest einer Druckentlastung (Δt_{E}) unterbrochen wird, so dass das in der SEI-Grenzschicht (9) gebildete Gas (12) freigesetzt wird und insbesondere in einer Gastasche der Batteriezelle gesammelt wird.

3. Verfahren nach Anspruch 2, **dadurch gekennzeichnet, dass** zur Freisetzung des Gases (12) aus der SEI-Grenzschicht (9) ein Walzenpaar (14) mit zwischengeordnetem Klemmspalt bereitgestellt ist, durch den die Batteriezelle führbar ist.

4. Verfahren nach Anspruch 2 oder 3, **dadurch gekennzeichnet, dass** während der Druckentlastung (Δt_{E}) der Erstladevorgang gestoppt ist, und/oder dass insbesondere die Druckentlastung nach einer Anzahl von Lade-/Entladephasen (L, N) durchgeführt wird.

5. Verfahren zur Fertigung einer Lithiumionen-Batteriezelle, insbesondere Batteriepouchzelle, mit einem Formationsprozess, in dem die Batteriezelle in einem Erstladevorgang in einen Ladestromkreis (K) geschaltet ist, wobei sich im Erstladevorgang Lithiumionen in das Aktivmaterial (3, 5) der Anode (A) der Batteriezelle einlagern, und zwar unter Bildung einer SEI-Grenzschicht (9) an der Anoden-Grenzfläche zum Elektrolyt (E), wobei die Anode (A) eine Ableiterfolie (1) aufweist, die beidseitig mit einer ersten Aktivmaterialschicht (3) und mit einer gegenüberliegenden zweiten Aktivmaterialschicht (5) beschichtet ist, wobei die beiden mit Bezug auf die Ableiterfolie (1) gegenüberliegenden ersten und zweiten Aktivmaterialschichten sich in ihrer Fähigkeit zur Lithiumionen-Einlagerung unterscheiden, **dadurch gekennzeichnet, dass** zum Ausgleich der unterschiedlich ausgeprägten Fähigkeit zur Lithiumionen-Einlagerung der Ladestromkreis (LK) in einen ersten Teilladestromkreis (K1) und in einen zweiten Teilladestromkreis (LK2) unterteilt ist, mit deren Hilfe die erste und die zweite Aktivmaterialschichten (3, 5) unabhängig voneinander sowie insbesondere mit unterschiedlichen Ladeströmen aufladbar sind.

6. Verfahren nach Anspruch 5, **dadurch gekennzeichnet, dass** die Anode (A) in einem Elektroden-/Separatorstapel in Stapelrichtung zwischen zwei Kathoden (K) angeordnet ist, und/oder dass im ersten Teilladestromkreis (LK1) ein erstes Ladegerät (13), die erste Aktivmaterialschicht (3) sowie eine der ersten Aktivmaterialschicht (3) zugewandte Kathode (K) eingebunden ist, und/oder dass insbesondere im zweiten Teilladestromkreis (LK2) ein zweites Ladegerät (15), die zweite Aktivmaterialschicht (5) und eine der zweiten Aktivmaterialschicht (5) zugewandte Kathode (K) eingebunden ist.

7. Verfahren nach einem der Ansprüche 5 oder 6, **dadurch gekennzeichnet, dass** während der Ladephase (L) des ersten Teilstromkreises (LK1) sich der zweite Teilstromkreis (LK2) in seiner Nichtladephase (N) befindet, und dass umgekehrt während der Ladephase (L) des zweiten Teilstromkreises (LK2) sich der erste Teilstromkreis (LK1) in seiner Nichtladephase (N) befindet.

8. Verfahren nach einem der vorhergehenden Ansprüche, **dadurch gekennzeichnet, dass** im Erstladevorgang nach Durchführung zumindest einer Ladephase (L) eine Entladephase (EN) folgt, in der sich die während der Ladephase (L) im Anoden-Aktivmaterial (3, 5) eingelagerten Lithiumionen zurück zur Kathode (K) bewegen, und zwar insbesondere unter Bildung von Austrittsporen in der SEI-Grenzschicht (9) des Anoden-Aktivmaterials (3, 5).

9. Verfahren nach Anspruch 8, **dadurch gekennzeichnet, dass** in der Entladephase (EN) eine CEI-Zusatzschicht in Form anorganischer Komponenten auf der anodenseitigen SEI-Grenzschicht (9) gebildet wird, so dass an der Anode (A) eine kombinierte SEI/CEI-Grenzschicht mit gesteigertem Adhäsionsvermögen gebildet wird.

10. Verfahren nach einem der vorhergehenden Ansprüche, **dadurch gekennzeichnet, dass** im Erstladevorgang auf dem Kathoden-Aktivmaterial eine CEI-Grenzschicht (11) an der Grenzfläche zum Elektrolyt (E) gebildet wird, und dass insbesondere in der Entladephase (EN) sich eine SEI-Zusatzschicht auf der kathodenseitigen CEI-Grenzschicht (11) aufbaut, und dass insbesondere die SEI-Zusatzschicht aus organischen Komponenten mit geringem Adhäsionsvermögen besteht, so dass insbesondere eine kombinierte CEI/SEI-Schicht entsteht, die aufgrund geringer Adhäsionskraft im Elektrolyt (E) auflösbar ist, ohne die Gesamtdicke der CEI-Grenzschicht (11) zu erhöhen.
